# EUROPEAN PATENT APPLICATION

(11) **EP 0 581 509 A1**
(43) Date of publication of application: **02.02.1994**
(21) Application number: 93305672.3
(22) Date of filing: 19.07.1993
(51) Int. Cl.: H02H 7/085

(54) **A system for controlling movement of a member driven by an electric motor**

(30) Priority: 29.07.1992 GB 9216092
(71) Applicant: THE GENERAL ELECTRIC COMPANY, p.l.c., London W1A 1EH (GB)
(72) Inventor: Bamford, Gary, Rossendale, Lancashire BB4 9PG (GB)
(74) Representative: Pope, Michael Bertram Wingate

(57) **Abstract**

This invention relates to a control system for controlling movement of a member moveable between two limit positions by means operable by an electric motor. The control system in- dudes means to determine successive positions of said member during movement thereof between said limit positions, each of said successive positions representing a distance from one of said limit positions and monitoring means for monitoring current used by the motor when said member is at each of said successive positions. The system further includes a memory in which is stored a table for a) values of monitored current taken during the preceding operation of said member or values representing average of monitored current values taken during at least two preceding operations of said member and b) successive positions at which said values of monitored current are taken. The monitored current value for a given position taken during the current operation is compared to the corresponding monitored current value in said table for the same given position and when the monitored current value exceeds the corresponding current value taken from the table, the motor is cut off to stop movement of the member. The monitored current values taken during the current operation are used to update the table in said memory.

## Description

The invention relates to a system for controlling movement of a member driven by an electric motor. The invention is particularly directed to a system for controlling a window of a motor vehicle which is lowered or raised by means operable by an electric motor.

A common problem with such systems is obstruction of the load mechanism by extraneous objects. When the movement of the mechanism is arrested in an abnormal fashion it may be damaged by the abnormal physical stresses which develop, and the motor and its associated circuitry may be damaged by the abnormally large current that flows. If the obstruction is caused by a person, a serious injury may result to the person causing the obstruction. This is particularly relevant in the example of a car window system.

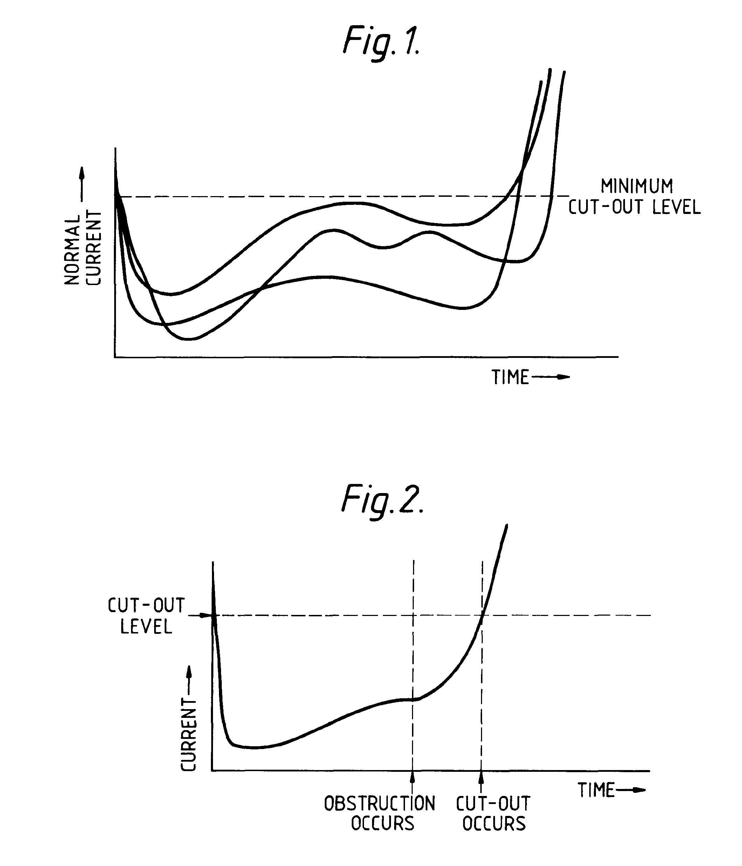

It is a common practice to deal with such situations by incorporating means to detect the increased current flow, or the consequent increase in temperature, and switch off the power supply to the motor. Such methods are usually adequate to prevent damage to the motor mechanism. However, they are often not sufficiently sensitive to prevent personal injury; this is because the current drawn by the motor vehicle varies considerably even in normal operation. The load on the motor will, in general, vary during the cycle of operation; this variation can be plotted as a graph of current versus either time or position. The exact shape of this graph will differ for each installation of the system owing to manufacturing tolerances. Furthermore, the shape of the graph for any one installation will change with time as wear develops and dirt accumulates. Changes may also occur as a result of changes in temperature, or other environmental factors. Figure 1 of the accompanying drawing is an example of such graphs. A simple cut-out arrangement as described above is set to operate when the current, or temperature, exceeds the highest level ever likely to occur at any time in the life of any installation of the system; in most circumstances, this level will only be reached after some delay following obstruction, as shown in Figure 2 of the accompanying drawings. During this delay the force exerted by the motor can cause considerable damage to a person or a fragile object obstructing the movement of the mechanism.

It is an object of this invention to overcome this difficulty by "mapping" the motor current against one or more variables which define the state of the system.

According to the invention there is provided a control system for controlling movement of a member moveable between two limit positions by means operable by an electric motor, the control system including means to monitor current used by the electric motor during movement of the member between said limit positions, means to compare each monitored current value with a corresponding predetermined value and means to stop movement of the member when a monitored current value exceeds its corresponding predetermined value.

The predetermined values against which the monitored current values are compared are taken from multi-dimensional maps of current values taken during the previous operations of the moveable member versus one or more variables which define the state of the moveable member. Whilst such multi-dimensional maps become difficult to visualise, they can be easily manipulated with computers. In the present case, the simplest form of map is the graph already shown in Figure 1; this is a 2-dimensional map, showing normal current as a function of time or position. It is also possible to record a 3-dimensional map showing normal current as a function of both time and position. The latter is a trivial exercise if the operating cycle is always run to completion at a constant speed, so that a given position is always associated with a given time.

In one embodiment of the invention, the control system includes means to determine successive positions of said member during movement thereof between said limit positions, each of said successive positions representing a distance from one of said limit positions, said monitoring means monitoring current used by the motor when said member is at each of said successive positions and a memory in which is stored a table of a) values of monitored current taken during the preceding operation of said memberorval- ues representing average of monitored current values taken during at least two preceding operations of said member and b) successive positions at which said values of monitored current are taken. The monitored current value for a given position taken during the current operation is compared to the corresponding monitored current value (the corresponding predter- mined value) in said table for the same given position and the monitored current values taken during the current operation is used to update the table in said memory.

The system embodying the invention further includes a limit switch which is activated to stop said motor when said member reaches one of said limit positions. The control system also includes a store in which is stored net-elapsed-time (NET) representing current position of the moveable member, said store being continuously updated during movement of said member between the limit position and being reset when said limit switch is activated. The net-elapse-time (NET) is the time taken by the member in reaching the current position from one of the limit positions. Preferably the position determining means includes a timer which is allowed to run when a user switch is turned on to determine the net-elapsed-time representing the current position of the member.

In a control system embodying the invention, the motor current at a given time is compared with the mapped value. If the mapped value is exceeded by a significant margin appropriate action can be taken, such as switching off the power. Two advantages are immediately apparent; firstly, the variation in normal current during the cycle of operation is now taken into account; secondly, a computer can be used to control more sophisticated reponses than a simple cut-out. The map is revised every time a successful operation is completed. This means that the map represents the normal operation of the specific installation at the current stage of its life and updating of the map takes into account both differences between individual installations and changes caused by environmental factors. Obstruction, or any other cause of overload, can therefore be detected much more quickly than with previous systems, before large forces are exerted against the obstruction.

More modifications for dealing with the overload condition are also possible with a computer employed in the system. For example, the mechanism may reverse to free the obstruction. In carwindows it may be desirable to include an override feature for security purposes i.e. to continue operation against deliberate obstruction by an assailant.

The invention will now be described further by way of example with reference to the accompanying drawings in which:-
Figure 1 is a graph of current used by an electric motor versus time during movement thereof between two limit positions;
Figure 2 shows a current versus time graph of the moveable member when an obstruction occurs during movement thereof;
Figure 3 illustrates a control system embodying the present invention; and
Figure 4 shows a flow chart depicting various steps of operation of the control system ilustrated in Figure 3.

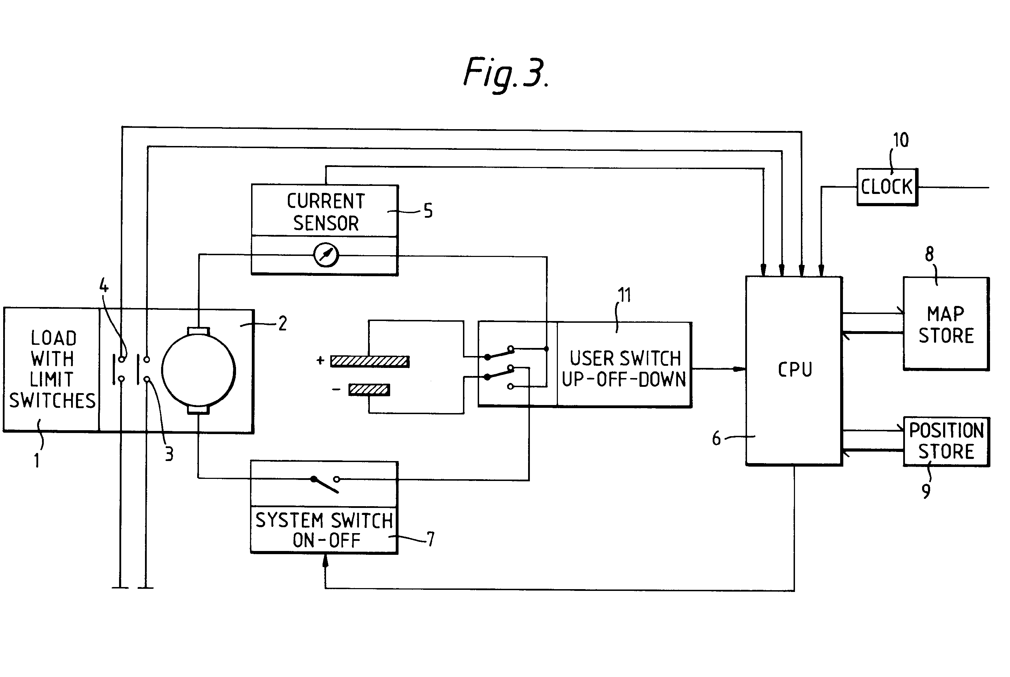

Referring to Figure 3, there is shown a load 1 such as a window of a motor vehicle which is lowered or raised by a member (not shown) operable by an electric motor 2. An upper limit switch 3 is activated to stop the motor when the window moving upwardly reaches a fully raised position. A lower limit switch 4 is activated to stop the motor when the window moving downwardly reaches a fully down position.

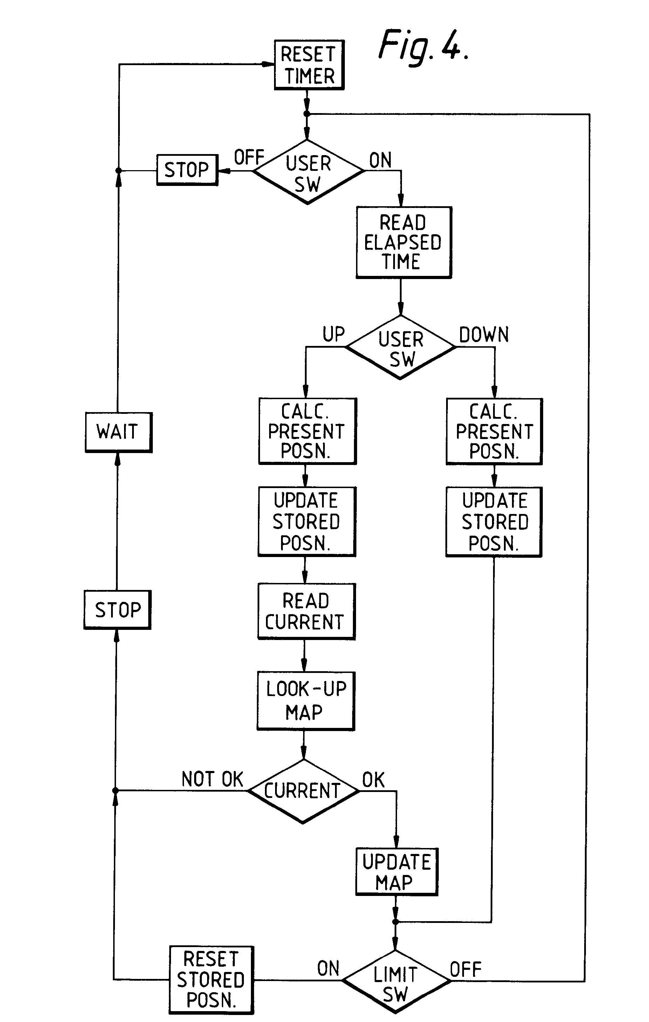

The control system illustrated in Figure 3 controls the movement of the window so that if during operation of the window any obstruction occurs, the motor is stopped to avoid or minimize any damage to a person or an object obstructing the movement of the window. A current sensor 5 is provided to monitor current used by the motor 3. The current sensor senses the current at a number of successive positions of the window during its upward or downward movment. The current sensor may be, for example, a small value resistor in the current path with a voltmeter connected across it. Further, the sensor 5 includes an analogue- to digital convertor to change the current values into digital form so as to provide a digital input of the current values to a CPU 6. A system switch 7 is connected between the motor 2 and the CPU 6 to switch the motor ON or OFF in response to a signal provided by the CPU 6. The switch 7 is normally kept ON. The CPU 6 has a non-volatile store 8 in which is stored the current-vs-time map and a store 9 in which is stored the net-elapsed-time (position) of the window during its upward or downward movement. There is also stored in the CPU read only memory a programme corresponding to the flow chart of Figure 4.

The net-elapsed-time is the variable used to index the current-vs-time map. In the embodiment illustrated in Figure 3, the system does not include any means to measure directly the position of the window, so the stage of operation reached has to be inferred, from the running time provided by a timer 10. One extremity of operation, say, 'fully down' is taken as the starting point and in such operation, when the timer starts to run, the NET is set to zero Further, whenever the lower limit switch is actuated, the NET is set to zero and whenever the upper limit switch is actuated the NET is set to maximum. The timer 10 is reset when the window is stopped. Whenever the window starts to move, the previous NET is read from the store, and the timer begins to run. During upward movement of the window, the NET is continuously incremented and stored, and during downward movement 4 of the window, the NET is continuously decremented and stored. The NET thus represents the position of the window at any time and is referred to as "position" in Figures 3 and 4. When the window stops in an intermediate position, the corresponding NET remains in the store and updating resumes from the same value next time the systems moves.

Figure 4 shows a flowchart indicating the logical operation of the CPU 6. In the normal state when the system switch 7 is ON, as shown at the top of the flowchart of Figure 4, and the user switch 10 is OFF, the system idles in the user switch monitoring loop ("Reset-Timer"/"User-Switch-OFF"/"STOP") as shown at the top of the flowchart of Figure 4 with the continuously-running timer held at zero.

When the user switch is turned ON i.e. UP or DOWN, the timer is allowed to run and the previous NET is recalled ("Read-Elapsed-Time"). Until a STOP occurs, the NET or "position" is continually updated and re-stored in store 9.

When the user switch 10 is UP, the updating of the NET is followed by checking the map; if the current does not exceed the corresponding current in the map, the map is updated. Thereafter the limit switches are checked and, if neither is ON the programme returns to check the user switch again and if this is still not OFF, the operation continues.

If current at a particular position (net-elapsed-time) exceeds the corresponding current in the map, the system switch is set OFF, and the system waits for a suitable period for the fault to be cleared (e.g. an obstruction removed) before returning to the user switch monitoring loop. When the current does not exceed the corresponding current in the map but either limit switch is ON, the stored position, or NET is reset as described above, the motor is stopped and the system waits and returns to the monitoring loop.

Many strategies are available forthe update-map function. The simplest is to overwrite the previous map entry with the latest current value. It may often be desirable to apply a more sophisticated strategy such as a "rolling average" in which the new value is a weighted average of the latest value and the previous one - i.e.:
NEW = PRESENT/K + OLD_{X}(K - 1)/K
where K is a suitable weighting factor and the stored value in the map is an integration of all previous values, changing slowly (large K = more slowly) to reflect consistent trends as the system ages, but largely ignoring "one-off" fluctuations.

In the embodiment described above the map is provided for the movement of the window in the upward direction so that if the obstruction occurs during upward movement, the motor is stopped thereby avoiding any damage to a person or object causing obstruction.

In this embodiment, no map is provided for the downward movement of the window. It is assumed that no considerable damage would be caused to a person or object during downward movement of the window. However, a map can be prepared for downward movement of the window and the programme stored in the CPU can be altered accordingly so that the downard movement follows the same step as depicted in the flowchart for the upward movement of the window.

## Claims

1. A control system for controlling movement of a member moveable between two limit positions by means operable by an electric motor, the control system including means to monitor current used by the electric motor during movement of the member between said limit positions, means to compare each monitored current value with a corresponding predetermined value and means to stop movement of the member when a monitored current value exceeds its corresponding predetermined value.

2. A control system according to Claim 1, including means to determine successive positions of said member during movement thereof between said limit positions, each of said successive positions representing a distance from one of said limit positions, said monitoring means monitoring current used by the motor when said member is at each of said successive positions and a memory in which is stored a table of a) values of monitored current taken during the preceding operation of said member or values representing average of monitored current values taken during at least two preceding operations of said member and b) successive positions at which said values of monitored current are taken, a monitored current value for a given position taken during the current operation being compared to the corresponding monitored current value (the corresponding pre- dtermined value) in said table for the same given position and the monitored current values taken during the current operation being used to update the table in said memory.

3. A control system according to Claim 2, including a limit switch which is activated to stop said motor when said member reaches one of said limit positions.

4. A control system according to Claim 3, including a store in which is stored net-elapsed-time representing current position of the moveable member, said store being continuously updated during movement of said member between the limit positions and being reset when said limit switch is activated, the net-elapse-time being the time taken by the member in reaching the current position from one of the limit positions.

5. A control system according to Claim 4, including a user switch operable to move said member between said limit positions and wherein said position determining means includes a timer which is allowed to run when the switch is on to determine the net-elapsed-time.

6. A control system according to anyone of the preceding claims, in which said moveable member is a window which is lowered or raised between the two vertically located spaced apart limit positions.

7. A window of a motor vehicle including a control system as claimed in Claim 6.
